# FASCICULE DE BREVET EUROPEEN

(11) **EP 2 962 080 B1**
(45) Date de publication et mention de la délivrance du brevet: **19.05.2021**
(21) Numéro de dépôt: 13714315.2
(22) Date de dépôt: 28.02.2013
(51) Int. Cl.: G01M 5/00, G01M 11/00

(54) **DISPOSITIF DE MESURE OPTIQUE AVEC VOIE DE REFERENCE ET VOIE DE MESURE, ET PROCEDE ASSOCIE**
OPTISCHE MESSVORRICHTUNG MIT EINEM REFERENZKANAL UND EINEM MESSKANAL UND ENTSPRECHENDES VERFAHREN
OPTICAL MEASUREMENT DEVICE HAVING A REFERENCE CHANNEL AND A MEASUREMENT CHANNEL, AND RELATED METHOD

(43) Date de publication de la demande: 06.01.2016
(73) Titulaire: Osmos Group, 75016 Paris (FR)
(72) Inventeur: HODAC, Bernard, F-75018 Paris (FR)
(74) Mandataire: IPAZ
(86) Numéro de dépôt international: PCT/FR2013/050425
(87) Numéro de publication internationale: WO 2014/131951

(56) Documents cités:
- EP-A1- 0 264 622
- EP-A2- 0 577 088
- GB-A- 2 196 735
- US-A- 4 472 628
- US-A1- 2010 290 035
- Advanced photonix Inc.: "Multi-Element Silicon Photodiodes", , 14 mars 2012 (2012-03-14), XP002715018, Extrait de l'Internet: URL:http://www.advancedphotonix.com/ap_pro ducts/standard_MultiElement.asp?from=leftn av [extrait le 2013-10-18]

## Description

### Domaine technique

La présente invention concerne un dispositif de mesure optique comprenant une voie de référence agencée pour détecter un signal optique de référence, et une voie de mesure agencée pour détecter un signal optique de mesure.

Le domaine de l'invention est plus particulièrement, mais de manière non limitative, celui des dispositifs de surveillance et étude des déformations de constructions, telles qu'un bâtiment, un tunnel ou un pont.

### Etat de la technique antérieure

On connait dans l'art antérieur des dispositifs de surveillance via des mesures optiques, comme par exemple selon le EP 0 264 622 B1, un dispositif de mesure de l'intensité d'un signal lumineux parcourant une fibre optique solidaire de la construction. Lorsque la construction se déforme, la fibre optique subit une variation de longueur qui se traduit par une variation de l'atténuation du signal lumineux à la sortie de la fibre optique.

Dans un mode de réalisation élaboré, la comparaison entre ce signal après un aller-retour dans la fibre optique et un signal de référence permet de déterminer la déformation de la construction indépendamment de l'évolution de la puissance du signal lumineux émis en raison du vieillissement de la source lumineuse, ou en raison d'une variation de la puissance alimentant la source lumineuse.

Les mesures étant sensibles aux variations de température, ces dispositifs nécessitent des asservissements en température qui s'avèrent encombrants et nécessitent des installations supplémentaires onéreuses. L'asservissement en température est consommateur d'énergie, ce qui est désavantageux, notamment lorsque le dispositif de mesure doit être conçu pour fonctionner de façon autonome sur pile ou batterie.

Le US 2010/0290035 A1 décrit un système de surveillance dans lequel un signal passe par une fibre optique à surveiller et par une voie de référence. Le problème de la sensibilité aux variations de température n'est pas abordé.

Dans le transducteur selon le US 4472628A, le signal optique est séparé en un signal de mesure et un signal de référence parcourant chacun une fibre optique respective allant à un détecteur optique respectif.

Le EP 05 77 088 A2 décrit un dispositif de détection de déplacement dans lequel il est prévu plusieurs éléments photorécepteurs dont certains reçoivent des signaux de référence. Le problème de la sensibilité aux variations de température n'est pas non plus abordé.

Le GB 2 196 735 A décrit un dispositif de mesure optique conforme au préambule de la revendication 1.

Le but de la présente invention est de proposer un dispositif éliminant ou réduisant tout ou partie des inconvénients précités.

### Exposé de l'invention

Cet objectif est atteint avec un dispositif de mesure optique comprenant une source d'émission lumineuse émettant un signal optique initial, des moyens de séparation agencés pour séparer le signal optique initial de façon à former un signal optique de référence et un signal optique de mesure, une voie de référence agencée pour détecter le signal optique de référence, et une voie de mesure agencée pour détecter le signal optique de mesure, une corde optique utilisée comme capteur, la corde optique comprenant au moins une fibre optique mécaniquement précontrainte, conduisant le signal optique de mesure entre les moyens de séparation et la voie de mesure, le dispositif comprenant en outre des moyens de calcul agencés pour mesurer une intensité du signal optique de mesure et une intensité du signal optique de référence, et en déduire une déformation de la corde optique, la voie de référence et la voie de mesure étant formées dans un unique substrat photodétecteur, caractérisé en ce que la source d'émission lumineuse émettant le signal optique initial est couplée thermiquement avect la voie de mesure et la voie de référence.

Grâce à un unique substrat, on s'assure que la voie de mesure et la voie de référence sont à chaque instant soumises aux mêmes conditions de température. On peut alors opter pour un dispositif de thermostatage peu encombrant puisque moins efficace. On peut même envisager de s'affranchir entièrement du dispositif de thermostatage. Ainsi, le dispositif de mesure selon l'invention présente un encombrement réduit.

De préférence, la source d'émission lumineuse est solidaire du substrat photodétecteur, ces deux éléments étant placés sur un unique bloc de support. Cette proximité permet des conditions de température et de vieillissement similaires, favorisant la précision des mesures du dispositif.

Selon un mode de réalisation avantageux, l'unique bloc de support est en céramique ou en laiton ou en inox. De par leur stabilité thermique et leurs faibles coefficients de dilatation, ces matériaux offrent une résistance aux variations de température et au vieillissement favorisant la précision des mesures du dispositif.

De préférence, un même boîtier contient le dispositif selon l'invention et des moyens d'alimentation aptes à fournir à eux seuls l'énergie nécessaire au fonctionnement du dispositif pendant plusieurs jours, de préférence plusieurs semaines, ou même plusieurs mois.

Le dispositif selon l'invention peut comprendre une source d'émission lumineuse fournissant un signal optique de mesure et un signal optique de référence. La source d'émission lumineuse peut être connectée à un moyen de stockage d'énergie ayant une capacité de stockage d'énergie relativement petite. Un tel moyen de stockage de l'énergie peut être une pile ou une batterie, par exemple de type nickel-cadmium, associée ou non à un moyen de charge tel qu'une cellule photovoltaïque.

Un tel moyen de stockage d'énergie ayant une petite capacité de stockage peut être installé directement sur l'appareil de surveillance, organisé en une unité compacte, préférablement en une seule pièce. Cela rend possible d'organiser l'appareil de surveillance en une unité compacte, sans aucune connexion physique vers un poste de contrôle éloigné. Par conséquent, l'appareil de contrôle est plus robuste, du fait qu'il n'y a pas de connexions physiques pouvant être facilement endommagées.

Les résultats de mesure sont de préférence transmis par liaison sans fils, par exemple à un poste de contrôle. Le dispositif comprend alors un émetteur pour l'émission des signaux représentatifs des résultats.

Dans une version particulièrement économe en énergie, seuls les résultats alarmants et/ou des résultats à intervalles de temps prédéterminés sont transmis.

L'appareil de contrôle étant disposé comme une unité, en une seule pièce, il est plus facile à installer. De plus, il nécessite moins de matériel (pas de connexion physique avec un poste de contrôle éloigné). En conséquence, les coûts de production sont réduits.

Avantageusement, le dispositif selon l'invention comprend une fibre optique agencée pour conduire le signal de référence entre la source d'émission et la voie de référence.

Le signal optique de mesure effectue un aller-retour dans la corde optique avant d'atteindre la voie de mesure. Selon le brevet EP 0 264 622 B1, la corde optique est constituée de guides d'ondes lumineuses qui servent à surveiller les déformations d'un élément constructif. Lesdits guides d'ondes lumineuses sont assemblés rigidement à l'élément constructif au moins sur une longueur partielle de ce dernier et sont suffisamment précontraints pour être sollicités en traction, même lorsque l'élément constructif se déforme en compression, contraction ou fluage.

Les moyens de calcul mesurent une intensité du signal optique de mesure et une intensité du signal optique de référence, afin de déterminer une déformation de la corde optique permettant de déduire une information relative à la déformation subie par l'élément constructif.

Selon un mode de réalisation avantageux, la voie de référence et la voie de mesure ne sont reliées à aucun dispositif de thermostatage, réduisant l'encombrement, le coût et la consommation énergétique du dispositif selon l'invention.

Avantageusement, le dispositif selon l'invention est formé autonome en énergie et d'un seul tenant.

Avantageusement, la voie de référence et/ou la voie de mesure est un wafer à 4 quadrants.

L'invention concerne également un procédé de mesure optique dans lequel une source lumineuse émet un signal optique initial et on procède à une séparation du signal optique initial de façon à former un signal optique de référence et un signal optique de mesure, on détecte dans une voie de mesure le signal optique de mesure qui se propage dans une corde optique conduisant le signal optique de mesure entre la séparation et la voie de mesure et on détecte dans une voie de référence le signal de référence, on relève l'intensité du signal de mesure et l'intensité du signal de référence pour obtenir une information relative à une contrainte mécanique à laquelle est soumise la corde optique, étant précisé qu'on utilise un unique substrat photo-détecteur pour la détection du signal optique de mesure et la détection du signal optique de référence, le procédé étant caractérisé en ce que la source d'émission lumineuse émettant le signal optique initialet est couplée thermiquement avec la voie de mesure et la voie de référence.

De préférence, on met en œuvre une étape de calibrage en température du substrat, pour s'affranchir de l'influence de la température du substrat sur les mesures obtenues. Typiquement, le dispositif comporte alors un capteur de température et l'unité de calcul prend en compte la température mesurée pour corriger la mesure d'intensité lumineuse en fonction de données obtenues par le calibrage initial et enregistrées dans une mémoire.

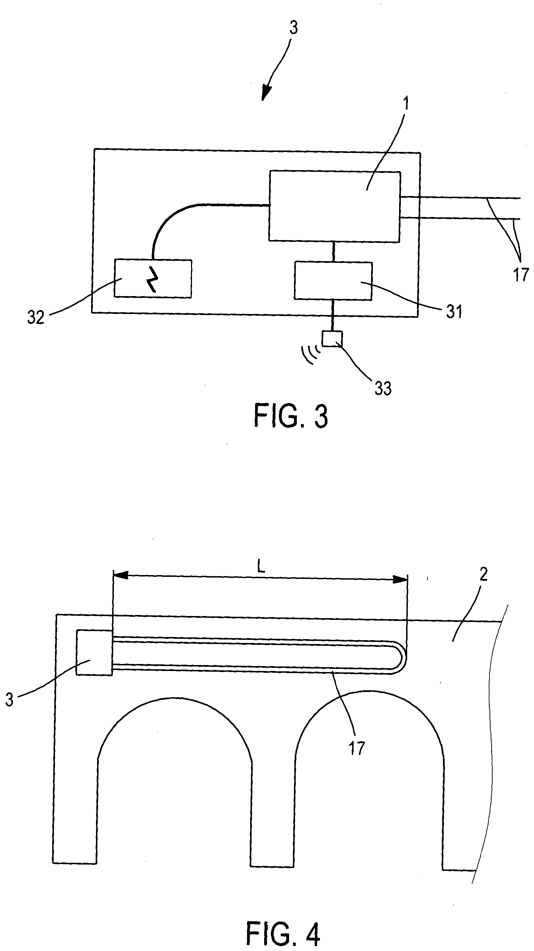

- La figure 3 illustre schématiquement un mode de réalisation préféré de l'invention.
- La figure 4 illustre une utilisation pratique du dispositif selon l'invention.

Le dispositif 1 comprend une voie de référence 13a agencée pour détecter un signal optique de référence, et une voie de mesure 13b agencée pour détecter un signal optique de mesure. La voie de référence 13a et la voie de mesure 13b sont formées dans un unique substrat photodétecteur 12, à base de silice.

De préférence, on utilise un composant comportant sur un substrat commun au moins deux zones pouvant opérer indépendamment l'une de l'autre. Il existe dans le commerce de tels composants fournis, notamment par Hamamatsu Corporation, 360 Foothill Road, Bridgewater, NJ 08807-0910, Etats-Unis, sous la dénomination PSD, et comportant même quatre zones appelées « quadrants ». Dans le cas de l'utilisation d'un tel composant à quatre quadrants, deux des quatre quadrants forment la voie de détection et la voie de mesure, et les deux autres quadrants sont inutilisés.

En variante, on peut créer deux voies de mesure et deux voies de référence pour parer à toute défaillance, ou encore avoir deux ou trois voies de mesure pour deux ou trois cordes optiques gérées par une même unité selon l'invention, placées chacune sur une zone de mesure respective de la structure ou des structures à surveiller. La voie de référence est alors commune pour les deux ou trois voies de mesure.

Selon l'invention, on exploite le fait que les différentes zones du substrat, bien qu'opérant en tant que voies séparées sont tout de même couplées thermiquement entre elles.

La source d'émission lumineuse 15 est typiquement une Led (diode électroluminescente) infrarouge, fournissant le signal d'origine. Le signal d'origine est séparé en le signal de mesure et le signal de référence par un séparateur de lumière 14, matérialisé par un substrat photoémetteur.

Le dispositif peut comprendre une fibre optique 16 agencée pour conduire le signal de référence entre le séparateur de lumière 14 et la voie de référence 13b.

Avantageusement, la source d'émission lumineuse 15 est solidaire du substrat photoémetteur 14, ces deux éléments étant placés sur un bloc de support 11.

Le bloc de support 11 est de préférence formé en céramique.

La corde optique 17 utilisée comme capteur, conduit le signal optique entre le séparateur de lumière 14 et la voie de mesure 13a.

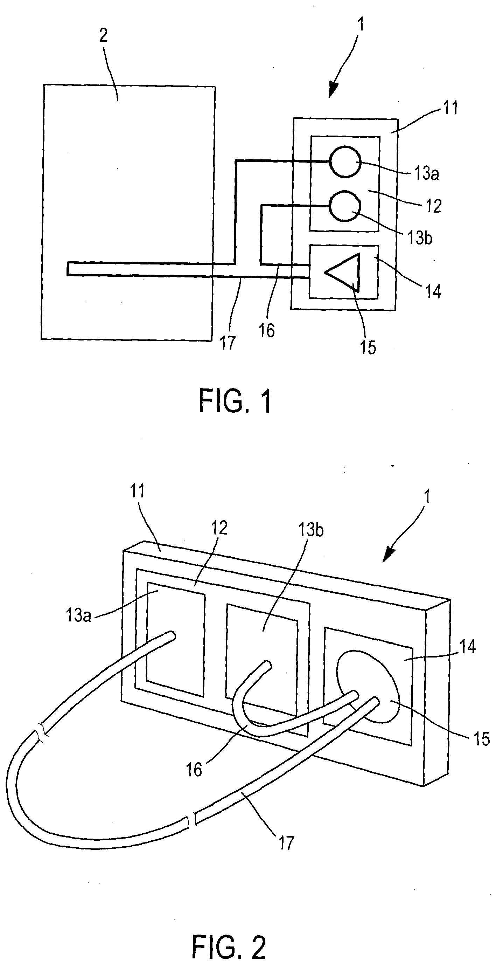

Le dispositif de mesure 1 dans l'exemple représenté à la figure 1 est installé à proximité d'une structure ou construction 2 dont les déformations sont à surveiller. Les déformations de la structure 2 sont détectées d'après l'affaiblissement de la lumière transmise par la corde optique 17, représentée schématiquement, dont une partie est solidarisée avec une partie correspondante de la structure 2, de manière à s'allonger ou se rétracter en même temps que la zone de la structure 2 dont la corde optique est solidaire.

Selon un aspect de l'invention, il est proposé un dispositif de mesure optique comprenant une source lumineuse et une voie de mesure reliée à la source lumineuse par une corde optique, dans laquelle la source lumineuse et la voie de mesure sont couplées thermiquement. Ainsi, toute dérive thermique du dispositif n'est fonction que d'un seul paramètre de température, à savoir la température commune de la source lumineuse et de la voie de mesure. Il est en outre prévu une voie de référence qui reçoit de la source lumineuse un signal de référence passant par un trajet autre que la corde optique, la voie de référence étant couplée thermiquement à la voie de réception et à la source lumineuse.

Le dispositif selon l'invention comprend typiquement des moyens de calcul 31 agencés pour mesurer une intensité du signal optique de mesure et une intensité du signal optique de référence, et en déduire une déformation de la corde optique.

Le dispositif peut également comporter un capteur de température détectant la température commune des voies de mesure et de référence, les moyens de calcul 31 peuvent prendre en compte la température pour interpréter les résultats de mesure en termes de déformations de structure. En variante, les valeurs d'intensité lumineuse et le cas échéant de température peuvent être transmises pour traitement à distance.

Le dispositif selon l'invention forme un ensemble d'un seul tenant 3 comprenant le dispositif de mesure selon l'invention 1, la source d'énergie 32 et le moyen de calcul 31. Via la corde optique 17, cet ensemble émet et réceptionne un signal lumineux pour permettre de surveiller les déformations d'une construction 2, sur une longueur L.

En outre, le dispositif comprend typiquement un émetteur 33 pour la transmission des résultats de mesure.

La voie de référence 13b et/ou la voie de mesure 13a est un wafer à 4 quadrants.

Bien sûr, l'invention n'est pas limitée aux exemples qui viennent d'être décrits et de nombreux aménagements peuvent être apportés à ces exemples sans sortir du cadre de l'invention tel que défini par les revendications.

## Revendications

1. Dispositif de mesure optique (1) comprenant une source d'émission lumineuse (15) émettant un signal optique initial, des moyens de séparation (14) agencés pour séparer le signal optique initial de façon à former un signal optique de référence et un signal optique de mesure, une voie de référence (13b) agencée pour détecter le signal optique de référence, et une voie de mesure (13a) agencée pour détecter le signal optique de mesure, une corde optique (17) utilisée comme capteur, la corde optique (17) comprenant au moins une fibre optique mécaniquement précontrainte conduisant le signal optique entre les moyens de séparation et la voie de mesure (13a), la voie de référence recevant ledit signal optique de référence passant par un trajet autre que la corde optique, le dispositif comprenant en outre des moyens de calcul (31) agencés pour mesurer une intensité du signal optique de mesure et une intensité du signal optique de référence, et en déduire une déformation de la corde optique (17), la voie de référence (13b) et la voie de mesure (13a) étant formées dans un unique substrat photodétecteur (12), **caractérisé en ce que** la source d'émission lumineuse (15) émettant le signal optique initial est couplée thermiquement avec la voie de mesure (13a) et la voie de référence (13b).

2. Dispositif selon la revendication 1, **caractérisé en ce qu'**il comprend une fibre optique (16) agencée pour conduire le signal de référence entre la source d'émission lumineuse (15) et la voie de référence (13b).

3. Dispositif selon la revendication 1, **caractérisé par** un bloc support (11) unique pour la source d'émission lumineuse (15) et le substrat photodétecteur (12).

4. Dispositif selon la revendication 3, **caractérisé en ce que** l'unique bloc de support (11) est en céramique ou en laiton ou en inox.

5. Dispositif selon l'une quelconque des revendications 1 à 4, **caractérisé en ce que** la voie de référence (13b) et la voie de mesure (13a) ne sont reliées à aucun dispositif de thermostatage.

6. Dispositif selon l'une quelconque des revendications 1 à 5, **caractérisé en ce qu'**il est formé autonome en énergie et d'un seul tenant.

7. Dispositif selon l'une quelconque des revendications 1 à 6, **caractérisé en ce que** la voie de référence (13b) et la voie de mesure (13a) appartiennent à un wafer à 4 quadrants.

8. Procédé de mesure optique dans lequel une source lumineuse (15) émet un signal optique initial et on procède à une séparation du signal optique initial de façon à former un signal optique de référence et un signal optique de mesure, on détecte dans une voie de mesure (13a) le signal optique de mesure qui se propage dans une corde optique (17) utilisée comme capteur conduisant le signa optique de mesure entre la séparation et la voie de mesure, et on détecte dans une voie de référence (13b) le signal optique de référence, la voie de référence recevant ledit signal optique de référence passant par un trajet autre que la corde optique, on relève l'intensité du signal de mesure et l'intensité du signal de référence pour obtenir une information relative à une contrainte mécanique à laquelle est soumise la corde optique, étant précisé qu'on utilise un unique substrat photo-détecteur (12) pour la détection du signal optique de mesure et la détection du signal optique de référence, le procédé étant **caractérisé en ce que** la source d'émission lumineuse (15) émettant le signal optique initial est couplée thermiquement avec la voie de mesure (13a) et la voie de référence (13b).

9. Procédé de mesure selon la revendication 8, **caractérisé en ce que** l'on met en œuvre une étape de calibrage en température du substrat, pour s'affranchir de l'influence de la température du substrat (12) sur l'obtention d'une information relative à une contrainte mécanique.

10. Procédé de mesure selon la revendication 8 ou 9, **caractérisé en ce qu'**il est mis en œuvre pour surveiller des contraintes mécaniques dans une structure (2) telle qu'un terrain ou une construction telle qu'un bâtiment, un tunnel ou un pont.

## Patentansprüche

1. Optische Messvorrichtung (1) mit einer Lichtemissionsquelle (15), die ein optisches Ausgangssignal emittiert, Trennmitteln (14), die eingerichtet sind, um das optische Ausgangssignal so zu trennen, dass ein optisches Referenzsignal und ein optisches Messsignal gebildet werden, einem Referenzkanal (13b), der eingerichtet ist, um das optische Referenzsignal zu detektieren, und einem Messkanal (13a), der eingerichtet ist, um das optische Messsignal zu detektieren, einem als Sensor verwendeten optischen Seil (17), wobei das optische Seil (17) zumindest eine optische Faser aufweist, die mechanisch vorgespannt ist und das optische Signal zwischen den Trennmitteln und dem Messkanal (13a) leitet, wobei der Referenzkanal das optische Referenzsignal empfängt, das eine von dem optischen Seil verschiedene Strecke durchläuft, wobei die Vorrichtung weiterhin Berechnungsmittel (31) aufweist, die eingerichtet sind, um eine Intensität des optischen Messsignals und eine Intensität des optischen Referenzsignals zu messen und daraus eine Verformung des optischen Seils (17) zu ermitteln, wobei der Referenzkanal (13b) und der Messkanal (13a) in einem einzelnen Photodetektorsubstrat (12) ausgebildet sind, **dadurch gekennzeichnet, dass** die das optische Ausgangssignal emittierende Lichtemissionsquelle (15) mit dem Messkanal (13a) und dem Referenzkanal (13b) thermisch gekoppelt ist.

2. Vorrichtung nach Anspruch 1, **dadurch gekennzeichnet, dass** sie eine optische Faser (16) aufweist, die eingerichtet ist, um das Referenzsignal zwischen der Lichtemissionsquelle (15) und dem Referenzkanal (13b) zu leiten.

3. Vorrichtung nach Anspruch 1, **gekennzeichnet durch** einen einzelnen Stützblock (11) für die Lichtemissionsquelle (15) und das Photodektorsubstrat (12).

4. Vorrichtung nach Anspruch 3, **dadurch gekennzeichnet, dass** der einzelne Stützblock (11) aus Keramik, Messing oder rostfreiem Stahl ist.

5. Vorrichtung nach einem der Ansprüche 1 bis 4, **dadurch gekennzeichnet, dass** der Referenzkanal (13b) und der Messkanal (13a) mit keiner Thermostatvorrichtung verbunden sind.

6. Vorrichtung nach einem der Ansprüche 1 bis 5, **dadurch gekennzeichnet, dass** sie energieautark und zusammenhängend ausgebildet ist.

7. Vorrichtung nach einem der Ansprüche 1 bis 6, **dadurch gekennzeichnet, dass** der Referenzkanal (13b) und der Messkanal (13a) einem Vierquadranten-Wafer angehören.

8. Optisches Messverfahren, in dem eine Lichtemissionsquelle (15) ein optisches Ausgangssignal emittiert und weiterhin eine Trennung des optischen Ausgangssignals stattfindet, sodass ein optisches Referenzsignal und ein optisches Messsignal gebildet werden, in einem Messkanal (13a) das optische Messsignal detektiert wird, das sich in einem als Sensor genutzten optischen Seil (17) fortpflanzt, der das optische Messsignal zwischen der Trennung und dem Messkanal leitet, in einem Referenzkanal (13b) das optische Referenzsignal detektiert wird, wobei das von dem Referenzkanal empfangene optische Referenzsignal eine von dem optischen Seil verschiedene Strecke durchläuft, die Intensität des Messsignals und die Intensität des Referenzsignals erfasst werden, um eine Information zu erhalten, die von der mechanischen Spannung abhängt, unter der das optische Seil steht, wobei ein einzelnes Photodektorsubstrat (12) für die Detektion des optischen Messsignals und die Detektion des optischen Referenzsignals genutzt wird, wobei das Verfahren **dadurch gekennzeichnet ist, dass** die Lichtemissionsquelle (15), die das optische Ausgangssignal emittiert, mit dem Messkanal (13a) und dem Referenzkanal (13b) thermisch gekoppelt ist.

9. Messverfahren nach Anspruch 8, **dadurch gekennzeichnet, dass** ein Schritt der Kalibrierung des Substrates bezüglich der Temperatur durchgeführt wird, um sich des Einflusses der Temperatur des Substrates (12) auf das Erhalten einer von einer mechanischen Spannung abhängigen Information zu entledigen.

10. Messverfahren nach Anspruch 8 oder 9, **dadurch gekennzeichnet, dass** es durchgeführt wird, um mechanische Spannungen in einer Struktur (2) wie einem Grundstück oder einer Konstruktion wie einem Gebäude, einem Tunnel oder einer Brücke zu überwachen.

## Claims

1. Optical measurement device (1) comprising a light emission source (15) emitting an initial optical signal, separation means (14) arranged to separate the initial optical signal so as to form a reference optical signal and a measurement optical signal, a reference channel (13b) arranged to detect the reference optical signal, and a measurement channel (13a) arranged to detect the measurement optical signal, an optical wire (17) used as a sensor, the optical wire (17) comprising at least one mechanically pre-stressed optical fiber guiding the optical signal between the separation means and the measurement channel (13a), the reference channel receiving said reference optical signal passing along a path other than the optical wire, the device moreover comprising calculation means (31) arranged to measure an intensity of the measurement optical signal and an intensity of the reference optical signal, and to deduce therefrom a deformation of the optical wire (17), the reference channel (31b) and the measurement channel (13a) being formed in a single photodetector substrate (12), **characterized in that** the light emission source (15) emitting the initial optical signal is thermally coupled to the measurement channel (13a) and the reference channel (13b).

2. Device according to claim 1, **characterized in that** it comprises an optical fibre (16) arranged to guide the reference signal between the light emission source (15) and the reference channel (13b).

3. Device according to claim 1, **characterized by** a single bearing block (11) for the light emission source (15) and the photodetector substrate (12).

4. Device according to claim 3, **characterized in that** the single bearing block (11) is made from ceramic or from brass or from stainless steel.

5. Device according to any one of claims 1 to 4, **characterized in that** the reference channel (13b) and the measurement channel (13a) are not connected to any thermostat device.

6. Device according to any one of claims 1 to 5, **characterized in that** it is formed autonomous in terms of energy and as a single unit.

7. Device according to any one of claims 1 to 6, **characterized in that** the reference channel (13b) and the measurement channel (13a) belong to a wafer with 4 quadrants.

8. Optical measurement method in which a light source (15) emits an initial optical signal and a separation of the initial optical signal is carried out so as to form a reference optical signal and a measurement optical signal, the measurement optical signal which propagates in an optical wire (17) used as a sensor guiding the measurement optical signal between the separation and the measurement channel is detected in a measurement channel (13a), and the reference optical signal is detected in a reference channel (13b), the reference channel receiving said reference optical signal passing along a path other than the optical wire, the intensity of the measurement signal and the intensity of the reference signal are taken in order to obtain an item of information with regard to a mechanical stress to which the optical wire is subjected, it being specified that a single photodetector substrate (12) is used to detect the measurement optical signal and to detect the reference optical signal, the method being **characterized in that** the light emission source (15) emitting the initial optical signal is thermally coupled to the measurement channel (13a) and the reference channel (13b).

9. Measurement method according to claim 8, **characterized in that** a step of temperature calibration of the substrate is implemented, in order to escape the influence of the temperature of the substrate (12) on obtaining an item of information with regard to a mechanical stress.

10. Measurement method according to claim 8 or 9, **characterized in that** it is implemented to monitor mechanical stresses in a structure (2) such as a plot of land or a structure such as a building, a tunnel or a bridge.
